# EUROPEAN PATENT SPECIFICATION

(11) **EP 2 503 892 B1**
(45) Date of publication and mention of the grant of the patent: **16.11.2016**
(21) Application number: 09810837.6
(22) Date of filing: 11.12.2009
(51) Int. Cl.: A01N 63/04, A23B 7/155, A23B 9/28

(54) **USE OF FUNGAL ORGANISM PYTHIUM OLIGANDRUM**
VERWENDUNG DES PILZIGEN ORGANISMUS PYTHIUM OLIGANDRUM
UTILISATION DU CHAMPIGNON PYTHIUM OLIGANDRUM

(30) Priority: 27.11.2009 CZ 20090794
(43) Date of publication of application: 03.10.2012
(73) Proprietor: Biopreparáty, spol. s r.o., 252 62 Únetice (CZ)
(72) Inventor: SUCHÁNEK, Martin, 160 00 Praha 6 (CZ)
(74) Representative: Smrckova, Marie
(86) International application number: PCT/CZ2009/000152
(87) International publication number: WO 2011/063771

(56) References cited:
- WO-A1-98/16110
- US-A- 4 259 317
- J. BROZOVÁ: "Exploitation of the mycoparasitic fungus Pythium oligandrum in plant protection", PLANT PROTECTION SCIENCE, vol. 38, no. 1, 2002, pages 29-35, XP002631723,
- J. HYSEK, M. VACH & M. JAVUREK: "Biological protection of the main cereals against fungal specific diseases", COMM. AGRICULT. APPLIED BIOLOG. SCI., vol. 70, no. 3, 2005, pages 169-173, XP009146974, Ghent ISSN: 1379-1176
- DATABASE BIOSIS [Online] BIOSCIENCES INFORMATION SERVICE, PHILADELPHIA, PA, US; 1998, SVECOVA M ET AL: "The effect of Pythium oligandrum Drechsler mycoparasite of fungal species of the genus Ceratocystis s.l", XP002631724, Database accession no. PREV199800516030 & LESNICTVI (PRAGUE), vol. 44, no. 9, 1998, pages 411-420, ISSN: 0024-1105
- DATABASE CAB [Online] CAB INTERNATIONAL, WALLINGFORD, OXON, GB; 2001, A. Kunca & R. Leontovyc: "Relationship between beech bark wounds and bark necrosis and possible methodfs to control bark necrosis", XP002631725, retrieved from stn accession no. 2001:42943 Database accession no. 2001:42943 & A. KUNCA & R. LEONTOVYC: LESNICKY CASOPSIS (FORESTRY JOURNAL), vol. 45, no. 5/6, 1999, pages 317-324, Bratislava ISSN: 0323-1046
- S. A. K. LAING & J. W. DEACON: "Aggressiveness and fungal host ranges of mycoparasitic Pythium species", SOIL BIOLOGY AND BIOCHEMISTRY, PERGAMON, OXFORD, GB, vol. 22, no. 7, 1 January 1990 (1990-01-01), pages 905-911, XP023673307, ISSN: 0038-0717, DOI: DOI:10.1016/0038-0717(90)90128-M [retrieved on 1990-01-01]
- ELZBIETA PATKOWSKA: 'EFFECTIVENESS OF GRAPEFRUIT EXTRACT AND PYTHIUM OLIGANDRUM IN THE CONTROL OF BEAN AND PEAS PATHOGENS' JOURNAL OF PLANT PROTECTION RESEARCH, [Online] 01 January 2006, pages 15 - 28, XP055187654 Retrieved from the Internet: <URL:http://www.plantprotection.pl/PDF/46(1 )/JPPR 46(1)_03 Patkowska.pdf> [retrieved on 2015-05-06]
- HALINA KURZAWINSKA ET AL: 'The evaluation of Pythium oligandrum and chitosan in control of Phytophthora infestans (Mont.) de Bary on potato plants' FOLIA HORTICULTURAE vol. 21, no. 2, 25 October 2009, pages 13 - 23, XP055187641

## Description

### Field of the Invention

The invention relates to the use of the fungal organism *Pythium oligandrum* in connection with the applicable agens carrier, especially in the area of plant production. In particular it concerns the new application for the elimination of originators of post-harvest losses caused by fungal diseases, yeasts and bacteria.

### Background of the Invention

After the chemical way of seed pickling against fungal diseases with fungicides, a new way of biological protection started to be used in the seventies of the 20^{th} century, which used living cells of antagonistic microorganism against the phytopathogens. It concerns e.g. preparation stimulating, in case of application to the seeds of sugar beet, the growth of growing plants and protecting them against rotting pursuant to CS AO No. 199 906 /1980 / of Veselý D. entitled "Agent stimulating when applied on the sugar beet seeds the growth of the descended plants and protecting them against scarlet fever", as well as the CS AO No. 204 208 /1981/ Veselý D., Hejdanek S. with title "Method of production of the preparation stimulating, in case of application to the seeds of sugar beet", the growth of growing plants and protecting them against scarlet fever", or CS AO No. 213659 /1986/, Veselý D., Hejdánek S. "Preparation for the protection of sugar beet against rotting on the basis of oospora of the mycoparasite *Pythium oligandrum.*" The latest said CS AO No. 213659 was patented in 12 other countries: USA 4259317, Canada 1132270, Federal Republic of Germany 2927224, German Democratic Republic 157491, UK 2027448, France 7917494, Japan 1337470, Denmark 156291, Belgium 877474, Austria 363734, Italy 1122032, Hungary 183040 and it solves the protection against rotting of sugar beet / damping off, which are caused by the soil phytopathogenic fungi. The same issues are also solved with another invention CS AO No. 247 378 /1986/, Stanek M., Veselý D., entitled "Preparation for protection of growing plants of sugar beet against rotting", and also the utility model CZ No. 393 /1993/, Veselý, D. entitled "Preparation for support of growth of plants and/or their protection" (in Slovakia the corresponding utility model SK utility model No.429), which solve also exclusively the protection against damping-off of germinating plants and with focus on forest nursery.

From other foreign patent literature, 2 patents were granted in the USA for the biological protection against damping-off of germinating plants. US 4,574,083 /1986/ Baker R., R. Lifshitz: "Isolates of *Pythium* species, which are antagonistic to *Pythium ultimum",* which deals with the utilization of species of *Pythium* sp., which are antagonistic to the soil phytopathogenic fungus *Pythium ultimum,* causing damping-off of germinating plants, and also the US 5,961,971 /1999/, corresponding with WO 98/16110/1998/, Martin F. N.: "Biocontrol of fungal soilbome pathogens by *Pythium oligandrum",* which identifies 3 non-pathogenic isolates of the fungal organism *Pythium oligandrum* efficient against damping-off of germinating and growing plants of tomato and other vegetable species, which are caused by the phytopathogenic fungal organisms from the *Pythium* family.

There are also various scientific publications about the topic of application of the fungal organism of *Pythium oligandrum* against damping-off of various growing plants including vegetable species: for example successful application of *Pythium oligandrum* for the protection of cucumber against damping-off, which is caused by the phytopathogen *Pythium splendens:* Larsen H. /1985/ entitled "Bekaempelse af Pythium med specielt henblik pa biologisk bekaempelse vha antagonister" (Thesis, Veterinary and Agriculture Univerzity, Copenhagen, Denmark); also Thinggaard K. /1985/ with title "Interspecific antagonism: The use of Pythium oligandrum to control root rot of cucumber caused by Pythium splendens" (6th Scandinavian postgraduate course in plant pathology. "Sene pathosystems",p.p. 21-28, November 1985 in Sverige), and Thinggaard K., K. Larsen and J. Hockenhull /1988/ with title "Antagonistic Pythium against pathogenic Pythium on cucumber roots" (Bulletin OEPP/EPPO Bulletin 18, pp. 91-94).

In the scientific literature, *Pythium oligandrum* is always identified in connection with diseases of roots of growing plants and with mycoparazitism as the only type of effect, refer to e.g. Veselý D. /1987/ entitled "Biological control of damping-off pathogens by treating sugar-beet seed with a powdery preparation of the mycoparasite Pythium oligandrum in large-scale field trials", (pp. 445-449; In: Vančura V., Kunc F. /eds./ Interrelationships between microorganisms and plants in soil. Proceedings of an International Symposium Liblice, Czechoslovakia, June 22-27, 1987, Academia Publishing House of the Czechoslovak Academy of Sciences, Elsevier Science Publishers, Amsterdam, The Netherlands, Prague 1989), identifies successful utilization of the bio-preparation on the basis of *P*. *oligandrum* against damping-off of beet plants. On the example of damping-off of saplings of cucumber, Kratka J. Bergmanová, A. Kudelova /1994/ entitled "Effect of Pythium oligandrum and Pythium ultimum on biochemical changes in cucumber Cucumis sativus L" (Ztschr. f. Pfl. Krankh. u. Pfl. Schutz, 101 /4/, pp. 406-413) studied relationships between the mycoparasite *P*. *oligandrum* and the plant treated with it, which is demonstrated e.g. by the stimulation of growth of plants.

Al-Rawahi A. K., J. G. Hancock /1997/ entitled "Rhizosphere Competence of Pythium oligandrum", (Phytopathology Vol., 87, 9; 951-959), studied the colonization of rhizosphere and non-rhizosphere soil with the said fungal organism on the roots of saplings. Benhamou N., P. Rey, M. Chérif, J. Hockenhull and Y. Tirilly /1997/ entitled " Treatment with the Mycoparasite Pythium oligandrum Triggers Induction of Defence-related reactions in Tomato Roots When Challenged with Fusarium oxysporum f. sp. radicis-lycopersici" (Phytopathology, Vol. 87, 1: 108-122) submitted proofs that *Pythium oligandrum* initiates defence responses in the tomato roots against the phytopathogenic fungus *Fusarium oxysporum* f. sp. *radicis-lycopersici* as the complementary tape of effect of the mycoparazitism. Míša D. /1997/ entitled "Efficiency of biological preparations against grey mould lBofrytis cinerea Pers. et Fries /on grapevine" (Proceedings of the XIV Slovak and Czech Plant Protection Conference in Nitra 3rd-4th September 1997, pp. 294-296), tested the efficiency of the preparation with *Pythium oligandrum* as the contact fungicide against the grey mould on grapes of the grapevine. Veselý D. /1998/ entitled "Pythium oligandrum as a biological agent stimulating seed-potato germination and suppressing potato late blight primary infection" (5.2. 98, 7th International Congress of Plant Pathology, Edinburgh) by the treatment of the seedling tubers of potatoes, growth of sprouts and rootlets was stimulated and the development of symptoms of the primary infection of potato late blight was slowed down.

Benhamou N., P. Rey, K. Picard, Y. Tirilly /1999/ entitled "Ultrastructural and Cytochemical Aspects of the Interaction Between the Mycoparasite Pythium oligandrum and Soilbome Plant Pathogens" (Phytopathology, Vol. 89 6: 506-517), studied the interactions between the oomycetes *Pythium oligandrum* and various soil oomycetes and plants pathogens *P. ultimum, P. aphanidermatum, F. oxysporum* f. sp. *radicis-lycopersici, Verticillium alboatrum, Rhizoctonia solani* and Phytophthora megasperma. They found out that at least two different mechanisms seemed to be responsible in the process of the attack of the oomycete *P. oligandrum* on the pathogens: mycoparasitism
and antibiosis. Veselý D. /2000/ entitled "Polyversum as an effective seed dresser in wheat" (p. 120, Proceedings of 13th International EFOAM Scientific conference /Alf Oldi T., W. Lockeretz, V. Niggli /eds./ 28-31 August 2000, Basel), stated that *Pythium oligandrum* as the seed dresser improved health conditions of roots of winter wheat, whereby it also increased yields.

In addition to the aforesaid author's certifications and patents of the inventions, two scientific publications deal with the type of production of the preparation based on the application of the fungal organism *Pythium oligandrum:* Veselý D., S. Hejdánek /1984/ entitled "Microbial relations of Pythium oligandrum and Problems in the Use of This Organism for the Biological Control of Damping-off in Sugar-beet" (Zbl. Mikrobiol. 139, pp. 257-265) compare the advantages and problems of stationary surface cultivation and submersion cultivations. Mc Quilken M. P., J. M. Whipps and R. C. Cooke /1990/ entitled "Oospores of the biocontrol agent Pythium oligandrum bulk produced in liquid culture" (Mycol. Res. 94, 5, pp. 613-616) developed the method of production of oospores of *P. oligandrum* in static and aerated cultivation in liquid medium.

From the review of Brožová J. /2002/ entitled "Exploitation of the mycoparasitic fungus Pythium oligandrum in plant protection" (Plant Protection Science, vol. 38 (1) 29-35), is known exploitation of the mycoparasitic fungus Pythium oligandrum in plant protection for the growth stimulation of plants and for biological control on a wide spectrum of crop plants. It does not attack their tissue but occurs on the root surface, predominantly in the regions of hypocotyl - taproot, together with plant pathogenic fungi.

Hýsek J., Vach M., Javůrek M. /2005/ with title "Biological protection of the main cereals against fungal specific diseases" (Commun. Agricult. Applied Biolog. Sci. Ghent University, vol. 70 (3) 169-173), also discloses, that application of Pythium oligandrum as seed treatment or as spray in a composition further containing fertilizers results in the control of various phytopathogenetic microorganism as well as in an enhanced yield of cereal crops winter wheat and barley.

Švecová M., Čížková D., Veselý D. /1998/ entitled "The effect of Pythium oligandrum Drechsler mycoparasite of fungal species of the genus Ceratocystis s.l." (Lesnictvi Prague, vol. 44.(9) 411-420), disclose the advantageous properties of Pythium oligandrum in the control of wood affecting fungi namely the possibility to use the mycoparasite Pythium oligandrum to affect the occurrence of Ophiostomatales in the integrated control of forest - trees.

Another document US 4, 259,317 Veselý D, Hejdánek S. /1981/ with title "Preparation for the protection of emerging sugar beets against damping-off, and methods of its production" relates to a dry powdered preparation to be applied onto sugar beet seeds, the preparation containing, as its active constituent, organs of reproduction of Pythium oligandrum Drechsler, particularly the oospores, in a sufficiently high concentration of at least about 1,000,000 oospores per gram. Such concentration make it possible to apply about 100, 000 oospores or more onto every seed, which proved sufficient to secure protection of emerging sugar beet plants against "damping off" or "black leg" disease.

Kunca A., Leontovyc R.. /1999/ entitled "Relationship between beech bark wounds and bark necrosis and possible methods to control bark necrosis" (Lesnický časopis 45 (5/6) 317-324), also disclose the advantageous properties of Pythium oligandrum in the control of wood affecting fungi as well as the relationship between beech bark wounds and bark necrosis and possible methods to control bark necrosis.

According to Laing S.A.K. Deacon J.W. /1990/ entitled "Aggressiveness and fungal host ranges of mycoparasitic Pythium species" (Soil Biol Biochem 22 (7) 905-911), is also known that Pythium oligandrum is aggressive mycoparasite organism as evidenced by its ability to reduce cell activities of host fungi on cellulose film or filter paper.

Kurzawinska H., Mazur S. /2009/ with title "The evaluation of Pythium oligandrum and chitosan in control of Phytophthora infestans (Mont.) de Bary on potato plants" (Folia Holticulturae, Vol. 21 (2) 12-23), determined the effect of tuber dressing and plant spraying with *Pythium oligandrum* on the top leaves and tubers of "Ibis" potatoes infested by *Phytophthora infestans* observing a significant inhibition of top leaf and tuber infestation.

Patkowska E. /2006/ "Effectiveness of grapefruit extract and Pythium oligandrum in the control of bean and peas pathogens" (Journal of Plant Protection Research, Vol. 46 (1) 15-28), reported the effectiveness of grapefruit extract and *Pythium oligandrum* in protection of common bean, runner bean, and pea from soil-borne pathogenic fungi when dressing the seeds of particular plant species with these means.

Since 1997, the bio-fungicide preparation with the growth-stimulating effect, the efficient substance of which is the fungal organism *Pythium oligandrum Drechsler,* has been manufactured and commercially distributed by the company Biopreparáty, s.r.o. in approximately fifteen states of the world with various trade names. One of the names is bio-fungicide Polyversum.

### Summary of the Invention

The presented invention solves the problem of occurrence of the originators of microbial diseases causing post-harvest losses. of cultural plants.

The nature of the invention is the use of the fungal organism *Pythium oligandrum* as a strong mycoparasite and as efficient agens, with the applicable inorganic and/or organic carrier in the form of the preparation for prevention and elimination of occurrence of the originators of microbial diseases causing post-harvest losses by application after harvest or during storage of products of cultural plants.

Surprisingly, the advantages has been found out that:
1. There are new applications of preparations, the efficient substance of which is *Pythium oligandrum,* for the prevention of occurrence of originators of microbial diseases causing post-harvest losses before and during storage of products and seeds of cultural plants and all other commodities of both plant and animal agricultural production.
   Surprisingly it has been demonstrated that the application of the preparation, the efficient substance of which is the fungal organism *Pythium oligandrum,* significantly suppresses the originators of fungal, yeast and bacterial diseases of stored products of the agricultural production (e.g. vegetables, fruit, nuts, cereals, feeding mixtures for animals and other agricultural commodities) and semi-products and final products before the end application by the consumer (people, animals). The application of the fungal organism *Pythium oligandrum* after the harvest (e.g. in case of cereals) results in a decreased occurrence of residua of fungi (mycotoxins) of e.g. the family Fusarium (aflatoxins) in agricultural commodities. Nowadays, the presence of mycotoxins in the food chain has been a real health risk to the consumer.
2. During the application of the preparation, the efficient substance of which is *Pythium oligandrum,* on the walls of warehouses and surfaces of the storage technology (e.g. silos, warehouses of foodstuffs with controlled as well as uncontrolled atmosphere, racks and stackers), cellars, in the food-processing facilities (e.g. digester houses, preparation rooms, packing rooms), surface of packing for storage of foodstuffs and semi-products (e.g. storage transport boxes and cases), on the surface of transport packing (e.g. cases for fruit, boxes for bananas), on the surface of sales racks and on both internal and external surfaces of sales packing, pathogenic microflora, which caused rot decay, was demonstrably suppressed. The said applications considerably extended the storage period of stored agricultural commodities.
3. It is possible to apply the fungal organism *Pythium oligandrum* on paper cellulose materials, which are used directly or as a semi-product for the production of packing materials (e.g. fine paper packages of piece fruit and vegetables, bags and carrier bags for fruit and vegetables).

### Examples

*Pythium oligandrum* may be used for the aforesaid purposes for the application in aqueous solutions, namely in the form of dry mixtures or liquid cultures, in powder or in granules.

### The application of Pythium oligandrum as efficient substance in aqueous solutions in the form of dry mixtures.

For the application *of Pythium oligandrum* as efficient substance in form of aqueous solutions in the form of dry mixtures (powders) as wettable powders intended for application in the form of suspension after dispersion in water, both mineral and organic materials may be used as the inert filling of such powders. As suitable filling materials for such application, e.g. mineral and synthetic filling materials produced from silica, natural clay, vermiculite and various silicate materials can be used. As other suitable filling materials, we can also identify sulphates (calcium sulphate), silicates (magnesium silicate). As surface active substance in these wetting agents, there are two types of tensides: anion (anion-active, anionic) and non-ion (non-ionogen, non-ionic). Anion tensides are especially of the type of alkyl sulphates, alkyl-or alken sulphonan and alkyl benzene sulphonan. Non-ion tensides are especially products of higher alcohols but also alkyl phenols and aliphatic acids with alkylene oxide (i.e. either with ethylene oxide or, as the case may be, propylene oxide). The most preferred are wetting agents of alkyl-benzene and alkyl-naphthalene sulphonates, sulphates, aliphatic alcohols, amines or amides of acid, long chains of esters of sodium isethionate, esters of 45 sodium succinate, sulphates or sulphonated of vegetable oils and ditertiary non-saturated with glycols. The preferred dispergators are methyl cellulose, polyvinyl alcohol, lignin sulphonate, polymeric alkyl naphthalene sulphonates, sodium naphthalene sulphonates, polymethylene bisnaphthalene sulphonate and natrium-50-N-methyl-N-(long chain of the acid).

Such wettable powders are represented usually in the concentration from 0.5 percentage by weight to 99 percentage by weight. If required, a part may be replaced with inhibitor of corrosion or anti-foaming or both.

### Application of Pythium oligandrum as efficient substance in liquid cultures

For the application *of Pythium oligandrum* as efficient substance_in liquid cultures, the most preferred wetting agents are alkyl benzene and alkyl naphthalene sulphonates, sulphated aliphatic alcohols, amines or amides of acids, long chains of esters of sodium isethionate, esters of 45 sodium sulphosuccinate, sulphated or sulphonated vegetable oils.

### Application of Pythium oligandrum as efficient substance in emulsified oils

Emulsified oils are usually solutions or suspensions of the active material in waterless mixable solvents together with surface-active substances and/or emulsifiers. Emulsified oil may be mixed with the active substance, with an organic solvent. The following are suitable: chlorinated solvents, water non-miscible ethers, esters, ketones or in a mixture with aromatic hydrocarbons.

The most suitable emulsifiers for emulsified oil are long chains of alkyl or mercaptan polyethoxy alcohols, alkyl acryl polyethoxy alcohols, sorbitan-aliphatic acids, esters, ethers poly sorbitan with esters of aliphatic acids, polyethylene glycol with esters of aliphatic acids of colophony, aliphatic alkylol amides. Condensates of calcium and amine salt of aliphatic alcohols of sulphates, oil sulphonates dissoluble in oil, or preferably mixtures of the said components should form approximately from 1 to 90 percent by weight from the total composition.

### Application of Pythium oligandrum as efficient substance in granules

Granules are physically stable, particles of the composition including propagules of the efficient substance *Pythium oligandrum* with an organic or inorganic carrier. For the purpose of washing out of the efficient substance from the granule, surface active substances can be added.

### Application of Pythium oligandrum as efficient substance in wetting agents

Such wetting agents are used as suitable wetting agents that are of an anion or non-ion type.

### Type of preparation of Pythium oligandrum

The fungal organism Pythium oligandrum is grown in common fermenters on corn media without supplying further nutrition. After the removal of the supernatant by centrifugal operation or in the evaporator, the sediment with the production of oospora is dried. It is possible to separate oospora from the supernatant in the spray drier in an advantageous way. The advantage of this way is obtaining a clean concentrate of oospora, virtually without presence of the used nutrient medium and also mycelium that is destroyed in the aforesaid handling / drying / separation. Such obtained the concentrate, which can be homogenized at any time with the applicable inorganic or organic carrier of the efficient agens /internal filling material/.

### Testing of biological efficiency of the preparation of Pythium oligandrum according to the invention

All tests were performed by the company Biopreparáty spol. s. r. o. in the research laboratory. The applications extended the storage life; thanks to the elimination of rot and mould processes, the storage and preservation possibilities of crops and foodstuffs have improved rapidly.

### Accreditation and certification

The tests concerning the content of the active substance *Pythium oligandrum* were performed. Further to that, the development and progress of efficiency on moulds and phytoparasites and their mutual interaction, which was monitored, were detected. The company Biopreparáty spol. s. r. o. ensures cultivation and research of new cultivars of the microorganism *Pythium oligandrum.* Thanks to the application of various selective soils, the microorganism *Pythium oligandrum* is cultivated for certain applications so that their impact is as efficient as possible. Another process, which is performed by this company, is the actual incubation and fermentation of the cultures of *Pythium oligandrum.*

### Field of Application

The invention can be used as a new application method in the prevention of occurrence of originators of microbial diseases during the storage of products and seeds and other commodities of plant

## Claims

1. A use of the fungal organism *Pythium oligandrum,* as efficient agens, with the applicable inorganic and/or organic carrier in the form of the preparation for prevention and elimination of occurrence of the originators of microbial diseases causing post-harvest losses by application after harvest or during storage of products of cultural plants.

2. The use according to Claim 1, that products of cultural plants are namely fruits, vegetables, nuts, cereals and other crops.

## Patentansprüche

1. Verwendung des pilzigen Organismus Pythium oligandrum als Wirkstoff mit einem applizierbaren anorganischen und/oder organischen Träger in der Form eines Mittels für die Prävention und Eliminierung des Auftretens der Erreger mikrobieller Erkrankungen, die Verluste nach der Ernte verursachen, durch Anwendung nach der Ente oder während der Lagerung von Produkten von Kulturpflanzen.

2. Verwendung nach Anspruch 1, wobei die Produkte von Kulturpflanzen insbesondere Obst, Gemüse, Nüsse, Getreide und andere Früchte sind.

## Revendications

1. Utilisation du Champignon Pythium oligandrum en tant que substance active, avec support applicable inorganique et/ou organique sous forme de produit pour la prévention et l'élimination de la présence de facteurs de maladies microbiennes, entraînant des pertes d'après-moisson par une application après la moisson ou pendant l'entreposage de produits végétaux pour la culture.

2. Utilisation selon la revendication 1, où les produits végétaux pour la culture sont avant tout des fruits, légumes, noix, céréales et autres plantes.
